# EUROPEAN PATENT SPECIFICATION

(11) **EP 2 343 137 B1**
(45) Date of publication and mention of the grant of the patent: **31.12.2014**
(21) Application number: 10191223.6
(22) Date of filing: 15.11.2010
(51) Int. Cl.: B21D 19/08, B21D 28/32, B30B 1/40

(54) **Cam device for a press machine**
Nockenvorrichtung für eine Presse
Dispositif à came pour une presse

(30) Priority: 08.01.2010 JP 2010002774
(43) Date of publication of application: 13.07.2011
(73) Proprietor: Sankyo Oilless Industry, Inc, Tokyo 183-0036 (JP)
(72) Inventor: Shibata, Takashi, Fuchu-shi Tokyo 183-0036 (JP); Morita, Atsushi, Fuchu-shi Tokyo 183-0036 (JP); Taguchi, Kouichi, Fuchu-shi Tokyo 183-0036 (JP); Harada, Shizu, Fuchu-shi Tokyo 183-0036 (JP); Kako, Hiroyoshi, Fuchu-shi Tokyo 183-0036 (JP)
(74) Representative: Vossius & Partner

(56) References cited:
- EP-B1- 1 097 010
- EP-B1- 1 476 260
- JP-A- 2000 135 526

## Description

The present invention relates to a compactly unitized cam device, suitable for being mounted between a fixed mold and a movable mold for, for example, drilling a work.

In the prior art, when designing molds, arrangement of a cam device and other various functional units such as a guide post, a work detection device, and a carrying device so as to avoid mutual interference is required. Manufactures specific for functional units standardize these units and provide detailed description about their outside dimensions and movements along with specifications such as load abilities written on catalogues for easy arrangement in mold design. As an example of the prior art, JP-A-2000-135526 is referred.

The process ability required for the cam device for a press mold varies depending on the material and the thickness of a work (object to be machined), and the mounting position of the process tool on a cam slider of the cam device. The process ability that the cam device can exert is lowered as the mounting position of the process tool deviates from the center of the cam device.

Therefore, in the cam device in the prior art, every time when changes in thickness or material of the work (the object to be machined) or changes in mounting positions of the various functional units are made in the course of mold design, the size of the cam device must also be changed, which results in a problem of too much burden in making engineering changes.

There is another problem such that the cam device cannot exert its endurance as specified due to uneven contact with respect to a sliding surface of the cam device, which is caused by a mounting error introduced when being mounted on the mold, so that the lowering of the endurance life is resulted and hence replacement of the cam device in short intervals is required.

In order to solve the problems described above, it is an object of the invention to provide a cam device which allows specification changes, which are required to be made when changing the process ability of the cam device in the course of the mold design or the use, to be achieved without necessity of changes in outside shape of the cam device.

In order to solve the above-described problem and achieve the object, there is provided a cam device including: a cam holder having a sliding contact surface; a cam slider having a sliding contact surface which comes into sliding contact with the sliding contact surface of the cam holder to allow the cam slider being freely movable, and a cam surface to move the cam slider in a predetermined process direction; and a cam driver having a cam surface, which comes into contact with the cam surface of the cam slider, and is configured to forcedly move the cam slider in the predetermined process direction, wherein hardness of the sliding contact surface of the cam holder is set to be lower than hardness of the sliding contact surface of the cam slider, hardness of the cam surface of the cam driver is set to be lower than the hardness of the cam surface of the cam slider, and whereby in case a load exerted to the cam device is changed, the load change is compensated by changing the hardness or the material of the sliding contact surface of the cam holder or by changing the hardness or the material of the cam surface of the cam driver without changing the hardness of the sliding contact surface and the cam surface of the cam slider.

The sliding contact surface of the cam holder can be formed of a sliding contact member detachably attached to the cam holder, and the cam surface of the cam driver is formed of a cam member detachably attached to the cam driver.

Preferably, combinations of the materials are same between a sliding surface made up of the sliding contact surface of the cam slider and the sliding contact surface of the cam holder and a sliding portion made up of the cam surface of the cam driver and the cam surface of the cam slider, and the enlargement of the contact surface area due to the conformity during the initial abrasion period is accelerated by increasing the surface roughness of the sliding surface after the finishing process, or by changing arrangement of multiple recessed pockets formed on the sliding surface to fill up solid lubricant, and the contact surface pressure is prevented from excessively increasing due to uneven contact caused by a mounting error of the cam device and a process error of the mold.

Preferably, the cam devices are grouped depending on the basis of width dimensions, and the design structures of the respective groups are determined in such a manner that the maximum process ability in a certain group among the groups is larger than the minimum process ability of an adjacent group having a larger width dimension, and smaller than the maximum process ability in an adjacent group having a smaller width dimension, thereby reducing the necessity of changing the cam device for the change of the process ability.

With the cam device according to the invention, the change of the specifications of the cam device in a case where the process ability and the mounting position of the cam device are changed in the course of the mold design can be performed without necessity of changing the outside shape of the cam device, so that the number of processes of the design change in the mold design can be reduced, and the period required for designing can also be reduced.

Furthermore, excessive increase in frequency of replacement of the cam device due to the lowering of the endurance life of the sliding surface of the cam device caused by the uneven contact thereof, which is caused by the change in material and thickness of the work (object to be processed) after the operation, a minute process, or the assembly error of the mold can be prevented.

In addition, the sliding properties of the cam device can be improved by replacing only the sliding member as needed to improve the process ability of the cam device. Therefore, the improvement of the process ability after the operation can be achieved by the replacement of part of the members instead of the replacement of the entire cam device, so that the cost for improving the process ability is reduced.
Fig. 1 is an exploded perspective view showing a cam device according to an embodiment of the invention; and
Fig. 2 is a graph showing a relationship between the process ability and the cam width, which is the most important factor in mold designs for the respective types, of the same cam device.

A cam device 1 according to an embodiment of the invention includes a cam holder 2, a cam slider 3, and a cam driver 4. The cam holder 2 has a sliding contact surface 2a. The cam slider 3 is freely movable on a sliding contact surface 3a that comes into sliding contact with the sliding contact surface 2a of the cam holder 2, and is moved on a cam surface 3b in a predetermined process direction. The cam driver 4 has a cam surface 4a, which comes into contact with the cam surface 3b of the cam slider 3, and is configured to forcedly move the cam slider 3 in the predetermined process direction.

The cam slider 3 includes an extension rod 5a projecting from one side thereof in the direction of sliding movement, and includes a returning resilient member 5 formed of a gas-pressure cylinder around the outer periphery of the proximal portion thereof. The returning resilient member 5 is configured to cause the extension rod 5a to be inserted into a front wall of the cam holder 2 to bring the cam slider 3 to its initial position using a resilient force thereof. The cam holder 2 is provided at one end thereof with a stopper 6 for preventing disconnection, which is configured to be freely secured with bolts, and on both side walls are provided with slide keepers 7 configured to slidably suspend the cam slider 3. The cam slider 3 is also provided with a forcedly returning follower 8 mounted thereon. The returning resilient member may be other member such as a coil spring.

The stopper 6 is a wall, which prevents the cam slider 3 suspended at a neck portion with the slide keepers 7 from coming off toward the rear. The slide keepers 7 are fixed to both side walls of the cam holder 2 to clamp the neck portion of the cam slider 3 with their L-shaped locking portions provided on lower sides thereof, thereby suspending the cam slider 3 so as to be slidable in the fore-and-aft direction. The forcedly returning follower 8 is configured to engage a guide groove on the side of the cam driver 4 to forcedly move the cam slider 3 to the initial position when the process tool of the cam slider 3 is caught by the work and hence can hardly come out.

Assuming that the surface pressure generated at the sliding portion is constant, the abrasion properties of the sliding portion, which is made up of sliding contact surfaces 2a and 3a of the cam holder 2 and the cam slider 3, depend on respective combinations of materials, process methods, heat treatments of a sliding member 2b and sliding portion 3c of the cam slider 3, and arrangement of multiple recessed pockets filled with solid lubricants and filled amounts of the solid lubricants.

In the same manner, assuming that the surface pressure generated at the sliding portion is constant, the abrasion properties of the sliding surface, which is made up of cam surfaces 4a and 3b of the cam driver 4 and the cam slider 3, depend on respective combinations of materials, process methods, heat treatments of a cam member 4b of the cam driver 4 and the sliding portion 3d of the cam slider 3, and arrangement of multiple recessed pockets filled with solid lubricants and filling density of the solid lubricants.

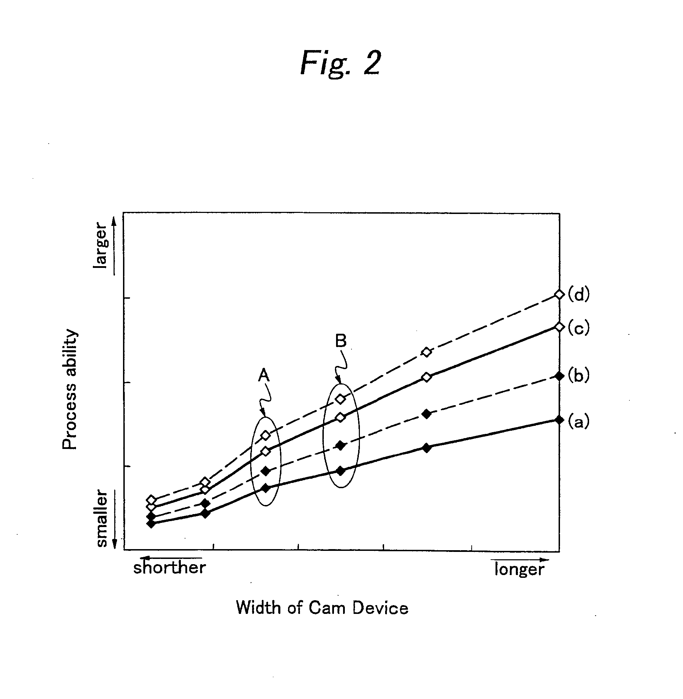

Accordingly, by selecting the material and the process method of the sliding portion and the cam width which is a basic dimension of the cam device according to the object, the process abilities and the progress of abrasion of the cam devices having the same outside shape size can be determined, and the maximum process ability in the same grade can be set to be higher than the minimum process ability of the cam device in the grade one rank higher. Fig. 2 shows examples of the combinations, and other combinations are also applicable.

Although not shown in Fig. 2, controlling the speed of the progress of abrasion also includes methods other than the combination of the materials. For example, it includes increasing the initial abrasion by changing the process method, for example, by increasing the surface roughness of a surface to be processed or increasing the filling density of the solid lubricant, thereby securing stable abrasion properties in order to avoid destructive damage such as burning with the sacrifice of the retardation of abrasion.

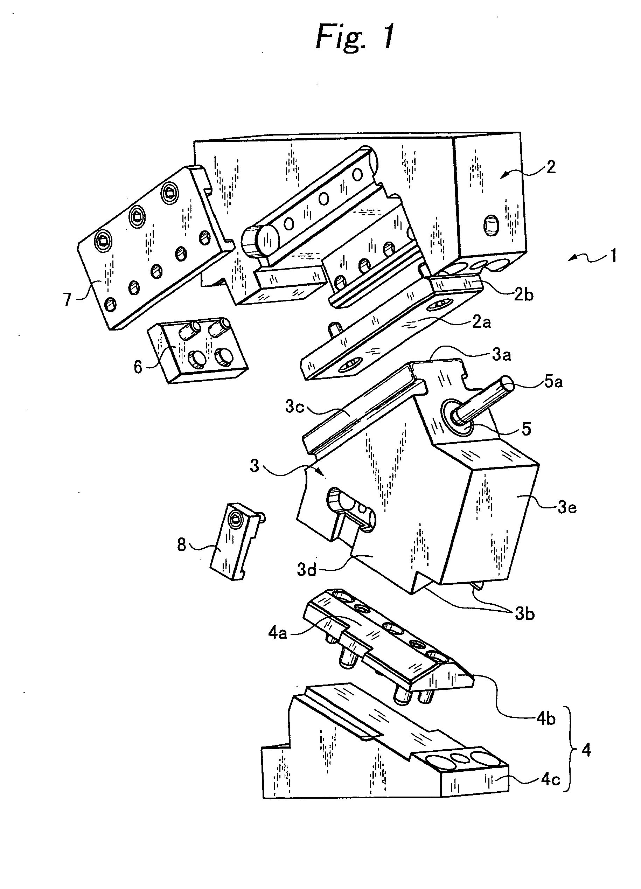

Therefore, as a measure for improving the process ability of the cam device on the basis of the replacement of parts after operation, the sliding member 2b is formed as a separate member from the cam holder 2, which is a member on the side of the main body, and is configured to be detachably attached to a mounting surface of the cam holder 2 with bolts or the like as shown in Fig. 1 in order to avoid the necessity of replacement of the cam slider which requires adjustment of mounting accuracy of the process tool such as a pierce punch for making holes.

As shown in Fig. 1, the cam driver 4 is also configured in the same manner. That is, the cam member 4b having the cam surface 4a is detachably attached to a cam driver base portion 4c to allow easy replacement using the bolts. Therefore, cost increase is avoided.

The process tool is attached to the cam slider 3, and the relative positional accuracy between the process tool and a work (object to be processed) requires a high degree of accuracy by means of adjustment or the like. Therefore, abrasion of the sliding portion made up of the cam surface 4a of the cam driver 4 and the cam surface 3b of the cam slider 3 needs to be low. In contrast, since the cam surface 4a of the cam driver 4 is formed into an inverted V-shape in cross section, the positional relationship between the cam slider 3 and the cam driver 4 is regulated so as not to be deviated in the direction orthogonal to the direction of movement of the cam slider.

Therefore, the sliding surface made up of the sliding contact surface 3a of the cam slider 3 and the sliding contact surface 2a of the cam holder 2 is affected by an error corresponding to a mounting error of the cam device and a process error of the mold, and hence so called an uneven contact occurs. In order to eliminate the uneven contact, it is necessary to prevent an excess of contact surface pressure by the enlargement of the contact surface due to the conformity during the initial abrasion period.

In order to satisfy the above-described requirement, if the combinations of the materials are the same between the sliding surface made up of the sliding contact surface 3a of the cam slider 3 and the sliding contact surface 2a of the cam holder 2, and the sliding portion made up of the cam surface 4a of the cam driver 4 and the cam surface 3b of the cam slider 3, the surface roughness of the sliding surface after finishing is increased or the arrangement of multiple recessed pockets to be filled with the solid lubricant is changed. Changing the combinations of the sliding materials is also effective in order to achieve this object.

The process ability of the cam device 1 may be selected from small, normal, slightly large, and large depending on the combination of the materials of the sliding portion (for example, low surface pressure, normal surface pressure, slightly high surface pressure, and high surface pressure) for each widths (for example, smallest, small, medium, slightly large, large, largest) of the cam device as shown in Table 1. As regards the selection of the width of the cam device, between the cam devices being in the adjacent grades in width, the widths of the adjacent cam devices are set in such a manner that the maximum process ability of a group of the cam devices having a certain width is larger than the minimum process ability of an adjacent group of the cam devices having a next larger width for compensating with respect to each other.

**[Table 1]**

| width of cam device | process ability | material combination of sliding portion |
|---|---|---|
| minimum | (a) small | low surface pressure |
| | (b) normal | normal surface pressure |
| | (c) slightly large | slightly high surface pressure |
| | (d) large | high surface pressure |
| small | (a) small | low surface pressure |
| | (b) normal | normal surface pressure |
| | (c) slightly large | slightly high surface pressure |
| | (d) large | high surface pressure |
| medium | (a) small | low surface pressure |
| | (b) normal | normal surface pressure |
| | (c) slightly large | slightly high surface pressure |
| | (d) large | high surface pressure |
| slightly large | (a) small | low surface pressure |
| | (b) normal | normal surface pressure |
| | (c) slightly large | slightly high surface pressure |
| | (d) large | high surface pressure |
| large | (a) small | low surface pressure |
| | (b) normal | normal surface pressure |
| | (c) slightly large | slightly high surface pressure |
| | (d) large | high surface pressure |
| largest | (a) small | low surface pressure |
| | (b) normal | normal surface pressure |
| | (c) slightly large | slightly high surface pressure |
| | (d) large | high surface pressure |

In this manner, the widths of the cam devices being in the adjacent grades in width are set in such a manner that, for example, the process ability of the cam device having a specification "large" among the cam devices A having a medium width is larger than the process ability of the cam device having a specification "small" among the cam devices B having a slightly larger width as shown in Fig. 2, so that the compatibility is secured between the cam devices being in the adjacent grades in width.

According to the cam device 1 in the embodiment of the invention, the cam holder 2 reciprocates from a top dead center to a bottom dead center in the vertical direction together with the upper mold, thereby the cam slider 3 reciprocates along the fore-and-aft direction in the process direction. Accordingly, abrasion due to the sliding movement occurs to some extent at the sliding portion made up of the sliding contact surface 2a and the sliding contact surface 3a, and the sliding portion made up of the cam surface 3b and the cam surface 4a.

However, according to the embodiment of the invention, abrasion at the sliding portion made up of the sliding contact surface 2a and the sliding contact surface 3a makes progress early to solve the uneven contact between the both sliding portions between the sliding contact surface 2a and the sliding contact surface 3a due to the process of the mold and the assembly error in an initial stage, so that the process ability of the cam device can be exerted as specified.

In addition, since the abrasion loss at the sliding portion made up of the cam surface 3b and the cam surface 4a which defines the relative positional relationship in movement of the process tool with respect to a work (the object to be processed) can be set to be smaller than the abrasion loss of the sliding portion made up of the sliding contact surface 2a and the sliding contact surface 3a, adverse effects caused by the uneven contact in the initial stage of operation can be eliminated and, simultaneously, fluctuations in positional accuracy of the process tool can also be reduced.

When the abrasion of the sliding contact surface beyond the scope of the supposition made at first at the time of the mold design occurs after the operation of the mold, the sliding member 2b or the cam member 4b is replaced with parts having the same shape but being formed of a material different from that selected at first at the time of design so as to achieve the combination causing less abrasion, so that the abrasion beyond the supposition is accommodated. Also, the replacing work is easily achieved by attaching and detaching using the bolts, so that the process accuracy of the cam device 1 is maintained constant. Since the process abilities of the adjacent cam devices are set to overlap with each other for each width of the cam device, replacement of the entire cam device can also be done easily.

With the cam device according to the embodiment of the invention, reduction of time required for designing in the stage of the mold design and reduction of burden in design are achieved, and the number of steps of the mold maintenance can be reduced by avoiding the problem which occurs after the operation of the device due to the lowering of performance of the cam device caused by minute error in process or assembly of the mold, which is inevitable for the mold, while maintaining the process accuracy at a high degree of accuracy. In addition, the improvement of the performance can easily be achieved by the replacement of the part and hence the process accuracy can be maintained at a high degree of accuracy. Therefore, the cam device according to the embodiment of the invention can be used for a variety of process tools.

## Claims

1. A cam device including:
a cam holder (2) having a sliding contact surface (2a);
a cam slider (3) having a sliding contact surface (3a) which comes into sliding contact with the sliding contact surface (2a) of the cam holder (2) to allow the cam slider (3) being freely movable, and a cam surface (3b) to move the cam slider (3) in a predetermined process direction; and
a cam driver (4) having a cam surface (4a), which comes into contact with the cam surface (3b) of the cam slider (3), and is configured to forcedly move the cam slider (3) in the predetermined process direction, **characterized in that**:
hardness of the sliding contact surface (2a) of the cam holder (2) is set to be lower than hardness of the sliding contact surface (3a) of the cam slider (3),
hardness of the cam surface (4a) of the cam driver (4) is set to be lower than the hardness of the cam surface (3b) of the cam slider (3), and
whereby in case a load exerted to the cam device (1) is changed, the load change is compensated by changing the hardness or the material of the sliding contact surface (2a) of the cam holder (2) or by changing the hardness or the material of the cam surface (4a) of the cam driver (4) without changing the hardness of the sliding contact surface (3a) and the cam surface (3b) of the cam slider (3).

2. The cam device according to Claim 1, wherein the sliding contact surface (2a) of the cam holder (2) is formed on a sliding contact member (2b) detachably attached to the cam holder.

3. The cam device according to Claim 1 or 2, wherein the cam surface (4a) of the cam driver (4) is formed on a cam member (4b) detachably attached to the cam driver (4).

4. The cam device according to Claims 1, 2 or 3, wherein combinations of the materials are same between a sliding surface made up of the sliding contact surface (3a) of the cam slider (3) and the sliding contact surface (2a) of the cam holder (2) and a sliding portion made up of the cam surface (4a) of the cam driver (4) and the cam surface (3b) of the cam slider (3), and
enlargement of the contact surface area due to conformity during the initial abrasion period is accelerated by increasing the surface roughness of the sliding surface after the finishing process, and the contact surface pressure is prevented from excessively increasing due to uneven contact caused by a mounting error of the cam device and a process error of a mold.

5. The cam device according to Claims 1, 2, 3 or 4, wherein combinations of the materials are same between a sliding surface made up of the sliding contact surface (3a) of the cam slider (3) and the sliding contact surface (2a) of the cam holder (2) and a sliding portion made up of the cam surface (4a) of the cam driver (4) and the cam surface (3b) of the cam slider (3), and
enlargement of the contact surface area due to conformity during the initial abrasion period is accelerated by changing arrangement of multiple recessed pockets formed on the sliding surface to fill up solid lubricant, and the contact surface pressure is prevented from excessively increasing due to uneven contact caused by a mounting error of the cam device and a process error of a mold.

6. The cam device according to Claims 1 to 5 wherein the cam devices (1) are grouped depending on the basis of width dimensions, and the design structures of the respective groups are determined in such a manner that the maximum process ability in a certain group among the groups is larger than the minimum process ability of an adjacent group having a larger width dimension, and smaller than the maximum process ability in an adjacent group having a smaller width dimension, thereby reducing the necessity of changing the cam device for the change of the process ability.

## Patentansprüche

1. Nockenvorrichtung, mit:
einem Nockenhalter (2), der eine Gleitkontaktfläche (2a) aufweist;
einem Nockengleitstück (3), das eine Gleitkontaktfläche (3a), die mit der Gleitkontaktfläche (2a) des Nockenhalters (2) in Gleitkontakt kommt, um es zu ermöglichen, dass das Nockengleitstück (3) frei beweglich ist, und eine Nockenfläche (3b) aufweist, um das Nockengleitstück (3) in eine vorgegebene Bearbeitungsrichtung zu bewegen; und
einem Nockenmitnehmer (4), der eine Nockenfläche (4a) aufweist, die mit der Nockenfläche (3b) des Nockengleitstücks (3) in Kontakt kommt, und konfiguriert ist, das Nockengleitstück (3) zwangsweise in die vorgegebene Bearbeitungsrichtung zu bewegen, **dadurch gekennzeichnet, dass**:
die Härte der Gleitkontaktfläche (2a) des Nockenhalters (2) niedriger als die Härte der Gleitkontaktfläche (3a) des Nockengleitstücks (3) eingestellt ist,
die Härte der Nockenfläche (4a) des Nockenmitnehmers (4) niedriger als die Härte der Nockenfläche (3b) des Nockengleitstücks (3) eingestellt ist, und
wodurch im Fall, dass eine Belastung geändert wird, die auf die Nockenvorrichtung (1) ausgeübt wird, die Belastungsänderung durch Ändern der Härte oder des Materials der Gleitkontaktfläche (2a) des Nockenhalters (2) oder durch Ändern der Härte oder des Materials der Nockenfläche (4a) des Nockenmitnehmers (4) ausgeglichen wird, ohne die Härte der Gleitkontaktfläche (3a) und der Nockenfläche (3b) des Nockengleitstücks (3) zu ändern.

2. Nockenvorrichtung nach Anspruch 1, wobei die Gleitkontaktfläche (2a) des Nockenhalters (2) auf einem Gleitkontaktelement (2b) ausgebildet ist, das abnehmbar am Nockenhalter befestigt ist.

3. Nockenvorrichtung nach Anspruch 1 oder 2, wobei die Nockenfläche (4a) des Nockenmitnehmers (4) auf einem Nockenelement (4b) ausgebildet ist, das abnehmbar am Nockenmitnehmer (4) befestigt ist.

4. Nockenvorrichtung nach Anspruch 1, 2 oder 3, wobei die Kombinationen der Materialien zwischen einer Gleitfläche, die sich aus der Gleitkontaktfläche (3a) des Nockengleitstücks (3) und der Gleitkontaktfläche (2a) des Nockenhalters (2) zusammensetzt, und einem Gleitabschnitt, der sich aus der Nockenfläche (4a) des Nockenmitnehmers (4) und der Nockenfläche (3b) des Nockengleitstücks (3) zusammensetzt, dieselben sind, und
eine Vergrößerung des Kontaktoberflächenbereichs infolge der Übereinstimmung während der anfänglichen Abnutzungszeitspanne durch Erhöhen der Oberflächenrauigkeit der Gleitfläche nach dem Endbearbeitungsprozess beschleunigt wird, und verhindert wird, dass sich der Kontaktflächendruck infolge eines ungleichmäßigen Kontakts übermäßig erhöht, der durch einen Montagefehler der Nockenvorrichtung und einem Bearbeitungsfehler einer Form verursacht wird.

5. Nockenvorrichtung nach Anspruch 1, 2, 3 oder 4, wobei die Kombinationen der Materialien zwischen einer Gleitfläche, die sich aus der Gleitkontaktfläche (3a) des Nockengleitstücks (3) und der Gleitkontaktfläche (2a) des Nockenhalters (2) zusammensetzt, und einem Gleitabschnitt, der sich aus der Nockenfläche (4a) des Nockenmitnehmers (4) und der Nockenfläche (3b) des Nockengleitstücks (3) zusammensetzt, dieselben sind, und
eine Vergrößerung des Kontaktoberflächenbereichs infolge der Übereinstimmung während der anfänglichen Abnutzungszeitspanne durch Ändern der Anordnung von mehreren ausgesparten Taschen beschleunigt wird, die auf der Gleitfläche ausgebildet sind, um ein festes Schmiermittel einzufüllen, und verhindert wird, dass sich der Kontaktflächendruck infolge eines ungleichmäßigen Kontakts übermäßig erhöht, der durch einen Montagefehler der Nockenvorrichtung und einem Bearbeitungsfehler einer Form verursacht wird.

6. Nockenvorrichtung nach Anspruch 1 bis 5, wobei die Nockenvorrichtungen (1) abhängig von der Grundlage der Breitenabmessungen gruppiert sind, und die Gestaltungsstrukturen der jeweiligen Gruppen in einer solchen Weise festgelegt werden, dass die maximale Bearbeitungsfähigkeit in einer bestimmten Gruppe aus den Gruppen größer als die minimale Bearbeitungsfähigkeit einer benachbarten Gruppe ist, die eine größere Breitenabmessung aufweist, und kleiner als die maximale Bearbeitungsfähigkeit in einer benachbarten Gruppe ist, die eine kleinere Breitenabmessung aufweist, wodurch die Notwendigkeit reduziert wird, die Nockenvorrichtung für eine Änderung der Bearbeitungsfähigkeit zu ändern.

## Revendications

1. Dispositif à came, comprenant :
un support de came (2) présentant une surface de contact glissant (2a) ;
un curseur de came (3) présentant une surface de contact glissant (3a) venant en contact de glissement avec la surface de contact glissant (2a) du support de came (2) pour permettre au curseur de came (3) d'être librement mobile, et une surface de came (3b) pour déplacer le curseur de came (3) dans une direction de processus définie ; et
un entraîneur de came (4) présentant une surface de came (4a) venant en contact avec la surface de came (3b) du curseur de came (3), et prévu pour forcer un déplacement du curseur de came (3) dans la direction de processus définie, **caractérisé :**
**en ce qu'**une dureté de la surface de contact glissant (2a) du support de came (2) est ajustée pour être inférieure à la dureté de la surface de contact glissant (3a) du curseur de came (3),
une dureté de la surface de came (4a) de l'entraîneur de came (4) est ajustée pour être inférieure à la dureté de la surface de came (3b) du curseur de came (3), et où,
si une charge appliquée sur le dispositif à came (1) varie, la variation de charge est compensée en modifiant la dureté ou le matériau de la surface de contact glissant (2a) du support de came (2) ou en modifiant la dureté ou le matériau de la surface de came (4a) de l'entraîneur de came (4) sans modifier la dureté de la surface de contact glissant (3a) et la surface de came (3b) du curseur de came (3).

2. Dispositif à came selon la revendication 1, où la surface de contact glissant (2a) du support de came (2) est formée sur un élément de contact de glissement (2b) fixé de manière amovible au support de came.

3. Dispositif à came selon la revendication 1 ou la revendication 2, où la surface de came (4a) de l'entraîneur de came (4) est formée sur un élément de came (4b) fixé de manière amovible à l'entraîneur de came (4).

4. Dispositif à came selon la revendication 1, 2 ou la revendication 3, où des combinaisons de matériaux sont identiques entre une surface de glissement composée de la surface de contact glissant (3a) du curseur de came (3) et de la surface de contact glissant (2a) du support de came (2) et une partie de glissement composée de la surface de came (4a) de l'entraîneur de came (4) et de la surface de came (3b) du curseur de came (3), et où un agrandissement de la superficie de contact en raison de la conformation pendant la période d'abrasion initiale est accéléré en élevant la rugosité superficielle de la surface de glissement après le processus de finition, et une élévation excessive de la pression de surface de contact pour cause de non planéité de contact suite à une erreur de montage du dispositif à came et de défaut d'un moule est empêchée.

5. Dispositif à came selon la revendication 1, 2, 3 ou la revendication 4, où des combinaisons de matériaux sont identiques entre une surface de glissement composée de la surface de contact glissant (3a) du curseur de came (3) et de la surface de contact glissant (2a) du support de came (2) et une partie de glissement composée de la surface de came (4a) de l'entraîneur de came (4) et de la surface de came (3b) du curseur de came (3), et où
un agrandissement de la superficie de contact en raison de la conformation pendant la période d'abrasion initiale est accéléré en modifiant l'agencement de plusieurs poches formées sur la surface de glissement pour l'alimentation en lubrifiant solide, et une élévation excessive de la pression de surface de contact pour cause de non planéité de contact suite à une erreur de montage du dispositif à came et de défaut d'un moule est empêchée.

6. Dispositif à came selon les revendications 1 à 5, où les dispositifs à came (1) sont regroupés en fonction de largeurs, et les conceptions de structure des groupes respectifs sont déterminées de manière à rendre la capacité de façonnage maximale d'un groupe défini parmi les groupes supérieure à la capacité de façonnage minimale d'un groupe adjacent de largeur supérieure, et inférieure à la capacité de façonnage maximale d'un groupe adjacent de largeur inférieure, d'où un moindre besoin de changer de dispositif à came pour modifier la capacité de façonnage.
